(19) Europäisches Patentamt

European Patent Office

Office européen des brevets

(11) Veröffentlichungsnummer: **0 260 390**

**A1**

(12) # EUROPÄISCHE PATENTANMELDUNG

(21) Anmeldenummer: 87109278.9

(51) Int. Cl.4: **A23K 1/16** , A23K 1/18

(22) Anmeldetag: 27.06.87

(30) Priorität: 20.08.86 DE 3628249

(43) Veröffentlichungstag der Anmeldung:
23.03.88 Patentblatt 88/12

(84) Benannte Vertragsstaaten:
AT BE CH DE ES FR GB IT LI LU NL SE

(71) Anmelder: Degussa Aktiengesellschaft
Weissfrauenstrasse 9
D-6000 Frankfurt am Main 1(DE)

(72) Erfinder: Bolze, Rudolf, Dr.
Grünaustrasse 11
D-6450 Hanau 9(DE)
Erfinder: Koch, Friedhelm, Dr.
Glatzerstrasse 22
D-6451 Grosskrotzenburg(DE)
Erfinder: Tanner, Herbert, Dr.
Wildaustrasse 20
D-6450 Hanau 9(DE)
Erfinder: Whitacre, Mark E, Dr.
Schanzenstrasse 3
D-6450 Hanau 11(DE)

(54) **Mittel zur Verbesserung des Wachstums und der Futterverwertung bei Schweinen.**

(57) Durch Zusatz einer Kombination aus Calcium-oder Magnesiumformiat und einem Kupfersalz zum Futter für junge wachsende Schweine wird eine höhere bzw. raschere Gewichtszunahme der Tiere und eine bessere Ausnutzung des aufgenommenen Futters erzielt. Außerdem wird die Häufigkeit von Durchfallerkrankungen vermindert.

EP 0 260 390 A1

## Mittel zur Verbesserung des Wachstums und der Futterverwertung bei Schweinen

Die Erfindung betrifft die Verwendung einer Kombination aus Calcium-oder Magnesiumformiat und einem Kupfersalz als Mittel zur Verbesserung des Wachstums und der Futterverwertung bei Schweinen.

Durch den Zusatz der erfindungsgemäß zu verwendenden Kombination zu Ferkel-und Mastschweinefuttern üblicher Zusammensetzung wird eine höhere bzw. raschere Gewichtszunahme der Tiere und eine bessere Ausnutzung des aufgenommenen Futters erzielt. Außerdem wird die Häufigkeit von Durchfallerkrankungen vermindert.

Aus in der einschlägigen Literatur veröffentlichten Fütterungsversuchen ist es bekannt, daß der Zusatz verschiedener organischer Säuren zum Futter die Leistung von Nutztieren deutlich verbessern kann.

Eine besonders gute Wirkung haben im allgemeinen Fumarsäure, Propionsäure und Zitronensäure. Diese Säuren können nach ihrer Resorption direkt in den Intermediärstoffwechsel eingreifen und werden dem Zitronensäurezyklus zugeführt und damit für die Energiegewinnung zur Verfügung gestellt.

Zum Teil beruht die Wirksamkeit der dem Futter zugesetzten organischen Säuren auch auf der Beeinflussung der mikrobiellen Besiedlung des Verdauungstraktes durch eine Absenkung des pH-Wertes. Außerdem führt der Zusatz der organischen Säuren zu einer erhöhten Enzymausschüttung über Speichel und Darmwand und zu einer Beeinflussung der bakteriellen Umsetzungen im Darm (M. Kirchgessner und F.X. Roth in "Pig News and Information", Vol. 3, Seiten 259 ff. (1982); A. Halama und E. Roth in "Tierärztl. Umschau " 40, Seiten 105 ff. (1985)).

Organische Säuren werden aufgrund ihrer durch die Absenkung des pH-Wertes bewirkten bakteriostatischen und fungistatischen Eigenschaften außerdem auch zur Konservierung von Futtermitteln oder als Silierhilfsmittel eingesetzt. In der Literatur wird darauf hingewiesen, daß die Wirkung von der undissozierten Säure ausgeht, und daß die entsprechenden Salze hinsichtlich der Geschwindigkeit des Wirkungseintritts, der Wirkungsdauer und der Wirkungsbreite nicht an die Säure heranreichen. Das beruht darauf, daß die Salze nur langsam und unvollständig hydrolysieren (vgl. z.B. Ullmann, Band 19, Seiten 455 ff. (1980)).

Aus Fütterungsversuchen mit Schweinen ist es ferner bekannt, daß der Zusatz von 0,6 Gewichtsprozent Ameisensäure zu einer geringfügigen Verbesserung der täglichen Gewichtszunahme führt, der Zusatz von 1,2 Gewichtsprozent Ameisensäure dagegen zu einer Verringerung. Auch die Futterverwertung ist bei der höheren Dosierung deutlich schlechter (P. Vanderwal in "World's Poultry Sci. J." 35, Seiten 70 ff. (1979)).

Der Einsatz von Kupfersalzen ist in der Schweinefütterung seit langem üblich. Das Kupfer wird dabei sowohl als Spurenelement als auch wegen seiner pharmakologischen Wirksamkeit eingesetzt. Wird das Kupfer in einer Dosierung eingesetzt, die weit über dem Bedarf als Spurenelement liegt, kann es wachstumsfördernde Effekte auslösen. In der Form des Kupfersulfats sind dazu Dosierungen von etwa 200 bis 250 ppm Küpfer, bezogen auf das Futtergewicht, erforderlich. Bei Verwendung besser resorbierbarer Kupferverbindungen, insbesondere Salzen des Kupfers mit Aminosäuren oder anderen organischen Säuren, kann die Dosierung etwas reduziert werden (M. Kirchgeßner et al. in "Bioinorganic Chemistry" 2, Seiten 255 bis 262 (1973); E. Grassmann und M.Kirchgeßner in "Zeitschrift für Tierphysiologie, Tierernährung und Futtermittelkunde", Band 25, Seiten 125 bis 127 (1969)).

Es wurde nun gefunden, daß der Zusatz einer Kombination aus 0,5 bis 3,0 Gewichtsprozent Calcium-oder Magnesiumformiat und 50 bis 230 ppm Kupfer in Form eines Kupfersalzes,jeweils bezogen auf das Gesamtgewicht des Futters, zu einer deutlichen Verbesserung des Wachstums und der Futterverwertung bei Ferkeln und Mastschweinen führt.

Die synergistische Wirkung der erfindungsgemäß zu verwendenden Kombination erlaubt es, den Kupfergehalt in den Futtermitteln niedriger zu halten als bei Verwendung eines Kupfersalzes für sich alleine. Denn der Zusatz der erfindungsgemäß zu verwendenden Kombination zu einem Futter gegebener Zusammensetzung zeigt in allen Fällen eine größere Wirkung als der Zusatz der gleichen Menge an Calcium-oder Magnesiumformiat für sich alleine oder der Zusatz der gleichen Menge an einem Kupfersalz für sich alleine. Die Möglichkeit, durch den Zusatz der erfindungsgemäß zu verwendenden Kombination den Kupfergehalt der Futtermittel bei gleicher Wirkung niedriger halten zu können, ist insofern bedeutsam als die bei alleinigem Zusatz von Kupfersalzen zur Erzielung der gewünschten Wirkung erforderlichen relativ hohen Kupfermengen über die Ausscheidungen der Tiere zu einer beträchtlich höheren Belastung der Umwelt mit diesem Schwermetall führen.

Um die Dosierung der relativ geringen Kupfermenge zu erleichtern, ist es zweckmäßig, die erfindungsgemäß zu verwendende Kombination in Form einer Vormischung aus dem Calcium-oder Magnesiumformiat und dem Kupfersalz einzusetzen. Wird eine solche Vormischung beispielsweise aus Calciumformiat und $CuSO_4 \bullet 5\ H_2O$ hergestellt, liegt deren Zusammensetzung zweckmäßigerweise im Bereich von etwa 92 bis 99 Gewichtsprozent Calciumformiat und 1 bis 8 Gewichtsprozent Kupfersulfat.

Außer Kupfersulfat können auch andere physiologisch unbedenkliche Kupfersalze verwendet werden, z.B. Kupferacetat, Kupfercarbonat-monohydrat, Kupferchlorid, Kupfermethioninat oder Kupferaspartat.

Die Erfindung soll durch die nachfolgenden Beispiele und Vergleichsversuche verdeutlicht werden:

Beispiel 1:

Es wurde ein Fütterungsversuch mit 48 jungen wachsenden Schweinen im Gewichtsabschnitt von 15 bis 30 kg, eingeteilt in 4 Gruppen von jeweils 12 Tieren durchgeführt. Die Tiere waren in Einzelkäfigen untergebracht. Das Futter bestand für jede Gruppe aus 98,5 Gewichts prozent eines handelsüblichen Ferkelfutters und 1,5 Gewichtsprozent eines Zusatzmittels und hatte folgende Zusammensetzung (in Gewichtsprozent):

Mais 31,0
Sojaextraktionsschrot 9,0
Maiskleberfutter 5,0
Weizenkleie 10,0
Fischmehl 6,0
Vitamin/Mineralstoff-Mischung 1,0
Weizen 25,2
Hafer 8,0
Luzernegrünmehl 3,3
Zusatzmittel 1,5

Die Vitamin/Mineralstoff-Mischung enthielt unter anderem, bezogen auf das Gesamtgewicht des Futters, 20 ppm Kupfer.

Die Tiere der als Kontrolle dienenden Gruppe I erhielten als Zusatzmittel eine Vormischung aus 80 Gewichtsprozent Maisschrot und 20 Gewichtsprozent Calciumcarbonat. Ihr Futter enthielt demnach insgesamt 20 ppm Kupfer.

Die Tiere der Gruppe II erhielten als Zusatzmittel eine Vormischung aus 96 Gewichtsprozent Calciumformiat und 4 Gewichtsprozent $CuSO_4 \bullet 5\,H_2O$. Ihr Futter enthielt demnach insgesamt 170 ppm Kupfer.

Die Tiere der Gruppe III erhielten als Zusatzmittel reines Calciumformiat. Ihr Futter enthielt demnach insgesamt 20 ppm Kupfer.

Die Tiere der Gruppe IV erhielten als Zusatzmittel die Vormischung wie die Gruppe I, aber mit einem zusätzlichen Gehalt an 600 ppm $CuSO_4 \bullet 5\,H_2O$. Ihr Futter enthielt demnach insgesamt 170 ppm Kupfer.

In der nachfolgenden Tabelle 1 sind für jede der 4 Gruppen die durchschnittliche tägliche Gewichtszunahme in Gramm und in %, bezogen auf die Kontrollgruppe I (= 100 %), und die durchschnittliche Futterverwertung in g Futter pro g Zunahme und in %, bezogen wiederum auf die Kontroll gruppe I (= 100 %), zusammengestellt:

## Tabelle 1

| Gruppe | Tägliche Zunahme | | Futterverwertung (g Futter pro | |
| --- | --- | --- | --- | --- |
| | (g) | (%) | g Zunahme) | (%) |
| I | 480 | 100 | 2,12 | 100 |
| II | 572 | 119 | 1,78 | 84 |
| III | 522 | 109 | 2,04 | 96 |
| IV | 508 | 106 | 2,06 | 97 |

## Beispiel 2:

Es wurde ein Fütterungsversuch mit Schweinen im Gewichtsabschnitt von 15 bis 35 kg, eingeteilt in 5 Gruppen, durchgeführt. Die einzelnen Gruppen wurden unter praxisähnlichen Bedingungen als Gruppe gehalten. Das Futter hatte für jede Gruppe folgende Zusammensetzung (in Gewichtsprozent):

Maisschrot   37,8
Gerste   20,0
Tapiokamehl   10,0
Sojavollmehl   15,5
Magermilchpulver   8,0
Fischmehl   3,0
Vitamin/Mineralstoff-Mischung   3,8
Aminosäuren-Mischung   0,2
Calciumcarbonat   0,2
Zusatzmittel   1,5

Die als Kontrolle dienende Gruppe I (48 Tiere) erhielt als Zusatzmittel eine Vormischung aus 80 Gewichtsprozent Maisschrot und 20 Gewichtsprozent Calciumcarbonat.

Die Gruppe II ( 48 Tiere) erhielt als Zusatzmittel eine Vormischung aus 96 Gewichtsprozent Calciumformiat und 4 Gewichtsprozent $CuSO_4 \bullet 5\ H_2O$.

Die Gruppe III (48 Tiere) erhielt als Zusatzmittel eine Vormischung aus 97,5 Gewichtsprozent Magnesiumformiat und 2,5 Gewichtsprozent $CuSO_4 \bullet 5\ H_2O$.

Die Gruppe IV (48 Tiere) erhielt als Zusatzmittel zu Vergleichszwecken Fumarsäure.

Die Gruppe V (48 Tiere) erhielt als Zusatzmittel zu Vergleichszwecken Zitronensäure.

In der nachfolgenden Tabelle 2 sind für jede der 5 Gruppen die durchschnittliche tägliche Gewichtszunahme in Gramm und in %, bezogen auf die Kontrollgruppe I (= 100 %), die durchschnittliche Futterverwertung in g Futter pro g Zunahme und in %, bezogen wiederum auf die Kontrollgruppe I (= 100 %), sowie die Durchfallhäufigkeit in % zusammengestellt:

## Tabelle 2

| Gruppe | Tägliche Zunahme (g) | (%) | Futterverwertung (g Futter pro g Zunahme) | (%) | Durchfall- häufigkeit (%) |
|--------|------|------|------|------|------|
| I | 505 | 100 | 2,15 | 100 | 21,0 |
| II | 567 | 112 | 2,01 | 93 | 5,8 |
| III | 545 | 108 | 2,04 | 95 | 4,0 |
| IV | 529 | 105 | 2,08 | 97 | 10,1 |
| V | 534 | 106 | 2,08 | 97 | 8,6 |

Die Differenzen ließen sich sowohl bei der Futterverwertung als auch bei den täglichen Zunahmen bei den Gruppen II und III zu der Kontrollgruppe I signifikant (p< 0,05) absichern.

## Beispiel 3:

Unter den im Beispiel 1 angegebenen Bedingungen und mit der dort verwendeten Futterration wurde ein Fütterungsversuch mit 48 Tieren, eingeteilt in 5 Gruppen, durchgeführt.

Die 10 Tiere der als Kontrolle dienenden Gruppe I erhielten als Zusatzmittel die im Beispiel 1 angegebene Vormischung. Ihr Futter enthielt demnach insgesamt 20 ppm Kupfer.

Die 10 Tiere der Gruppe II erhielten als Zusatzmittel eine Vormischung aus 99 Gewichtsprozent Calciumformiat und 1 Gewichtsprozent wasserfreiem Kupfersulfat. Ihr Futter enthielt demnach insgesamt 80 ppm Kupfer.

Die 10 Tiere der Gruppe III erhielten als Zusatzmittel eine Vormischung aus 97,5 Gewichtsprozent Calciumformiat und 2,5 Gewichtsprozent wasserfreiem Kupfersulfat. Ihr Futter enthielt demnach insgesamt 170 ppm Kupfer.

Die 10 Tiere der Gruppe IV erhielten als Zusatzmittel eine Vormischung aus 95,2 Gewichtsprozent Calciumformiat und 4,8 Gewichtsprozent Kupfermethioninat. Ihr Futter enthielt demnach insgesamt 140 ppm Kupfer.

Die 8 Tiere der Gruppe V erhielten als Zusatzmittel eine Vormischung aus 97,6 Gewichtsprozent Calciumformiat und 2,4 Gewichtsprozent Kupfermethioninat. Ihr Futter enthielt demnach insgesamt 80 ppm Kupfer.

In der nachfolgenden Tabelle 3 sind für jede der 5 Gruppen die durchschnittliche tägliche Gewichtszunahme in Gramm und in %, bezogen auf die Kontrollgruppe I (= 100 %), und die Futterverwertung in g Futter pro g Zunahme und in %, wiederum bezogen auf die Kontrollgruppe I (= 100 %), zusammengestellt:

Tabelle 3:

| Gruppe | Tägliche Zunahme (g) | (%) | Futterverwertung (g Futter pro g Zunahme) | (%) |
|--------|---------------------|-----|-------------------------------------------|-----|
| I | 460 | 100 | 1,95 | 100 |
| II | 517 | 112 | 1,82 | 93 |
| III | 532 | 115 | 1,81 | 93 |
| IV | 520 | 113 | 1,79 | 92 |
| V | 525 | 114 | 1,80 | 92 |

Beispiel 4:

Es wurde ein Fütterungsversuch unter Praxisbedingungen mit 120 Schweinen im Gewichtsabschnitt von 15 bis 40 kg, eingeteilt in 6 Gruppen von jeweils 20 Tieren, durchgeführt, bei dem der Einfluß verschiedener Dosierungen von Calciumformiat und/oder Kupfer in der Futterration geprüft werden sollte. Die Tiere waren paarweise aufgestellt, so daß je 2 Tiere eine Wiederholung bildeten:

Die Kontrollgruppe I erhielt ein Futter folgender Zusammentsetzung (in Gewichtsprozent):

Mais 32
Gerste 23
Tapiokamehl 10
Sojaöl 1
Sojavollmehl 25
Magermilchpulver 5
Mineralstoffmischung 1,7
Vitamin/Spurenelement-Mischung 1,5
Calciumcarbonat 0,8

Die Vitamin/Spurenelement-Mischung enthielt unter anderem, bezogen auf das Gesamtgewicht des Futters, 20 ppm Kupfer.

Die Tiere der Versuchsgruppen II bis VI erhielten zu diesem Futter unter entsprechender Verminderung des Anteils des Tapiokamehls verschiedene Mengen an verschiedenen Zusätzen, und zwar die Tiere der Gruppen II bis IV eine Vormischung aus 97 Gewichtsprozent Calciumformiat und 3 Gewichtsprozent $CuSO_4$ • 5 $H_2O$ (entsprechend 0,756 Gewichtsprozent Kupfer), die Tiere der Gruppe V reines Calciumformiat und die Tiere der Gruppe VI reines $CuSO_4$ • 5 $H_2O$.

Das Futter der Gruppe I enthielt kein Calciumformiat und nur 20 ppm Kupfer, das der Gruppe II (mit 0,9 Gewichtsprozent der obigen Vormischung) 0,87 Gewichtsprozent Calciumformiat und 88 ppm Kupfer, das der Gruppe III (mit 1,8 Gewichtsprozent der öbigen Vormischung) 1,75 Gewichtsprozent Calciumformiat und 155 ppm Kupfer, das der Gruppe IV (mit 2,7 Gewichtsprozent der obigen Vormischung) 2,62 Gewichtsprozent Calciumformiat und 223 ppm Kupfer, das der Gruppe V 1,80 Gewichtsprozent Calciumformiat und nur 20 ppm Kupfer (aus der Vitamin/Spurenelement-Mischung) und das der Gruppe VI (mit 0,054 Gewichtsprozent $CuSO_4$ 5 • $H_2O$) kein Calciumformiat und 156 ppm Kupfer.

In der nachfolgenden Tabelle 4 sind für jede der 6 Gruppen die durchschnittliche tägliche Gewichtszunahme in Gramm und in %, bezogen auf die Kontrollgruppe I (=100 %), und die Futterverwertung in g Futter pro g Zunahme und in % wiederum bezogen auf die Kontrollgruppe I (= 100 %), zusammengestellt:

Tabelle 4:

| Gruppe | Tägliche Zunahme (g) | (%) | Futterverwertung (g Futter pro g Zunahme) | (%) |
|--------|------|------|------|------|
| I | 505 | 100 | 2,60 | 100 |
| II | 532 | 105 | 2,48 | 95 |
| III | 539 | 107 | 2,46 | 95 |
| IV | 542 | 107 | 2,38 | 92 |
| V | 518 | 103 | 2,56 | 98 |
| VI | 512 | 101 | 2,52 | 97 |

Mittel zur Verbesserung des Wachstums und der Futterverwertung bei Schweinen

**Ansprüche**

Verwendung einer Kombination aus Calcium-oder Magnesiumformiat und einem Kupfersalz als Mittel zur Verbesserung des Wachstums und der Futterverwertung bei Schweinen.

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 751 768 (BASF) <br> * Patentansprüche 1,2; Seite 5, Absatz 4; Seite 9, letzter Absatz * <br> --- | 1 | A 23 K 1/16 <br> A 23 K 1/18 |
| Y | DE-A-2 546 051 (INTERCHEMIE) <br> * Patentanspruch 1; Seite 4, Zeilen 4-17; Beispiele 1-8 * <br> --- | 1 | |
| A | EP-A-0 081 970 (BP CHEMICALS LIMITED) <br> * Patentansprüche 1,3,5 * <br> --- | 1 | |
| A | CHEMICAL ABSTRACTS, Band 102, Nr. 15, April 1985, Seite 523, Zusammenfassung 130788y, Columbus, Ohio, US; M.S. EDMONDS et al.: "Feed additive studies with newly weaned pigs: efficacy of supplemental copper, antibiotics and organic acids" & J. ANIM. SCI. 1985, 60(2), 462-9 <br> * Zusammenfassung * <br> ----- | 1 | |

RECHERCHIERTE SACHGEBIETE (Int. Cl.4)

A 23 K
A 61 K

Der vorliegende Recherchenbericht wurde für alle Patentansprüche erstellt

| Recherchenort | Abschlußdatum der Recherche | Prüfer |
|---|---|---|
| DEN HAAG | 09-12-1987 | DEKEIREL M.J. |